(19) **Europäisches Patentamt / European Patent Office / Office européen des brevets**

(11) **EP 3 815 755 A1**

(12) **EUROPEAN PATENT APPLICATION**
published in accordance with Art. 153(4) EPC

(43) Date of publication:
**05.05.2021 Bulletin 2021/18**

(21) Application number: **19835019.1**

(22) Date of filing: **11.07.2019**

(51) Int Cl.:
*A63B 53/04* (2015.01)          *C22C 38/22* (2006.01)
*C22C 38/32* (2006.01)

(86) International application number:
**PCT/KR2019/008573**

(87) International publication number:
**WO 2020/013633 (16.01.2020 Gazette 2020/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.07.2018 SG 10201805971S**

(71) Applicants:
• **Kolon Industries, Inc.**
  **Seoul 07793 (KR)**
• **Attometal Tech Pte. Ltd.**
  **Singapore 079903 (SG)**

(72) Inventors:
• **KIM, Choongnyun Paul**
  **Seoul 07793 (KR)**
• **CHO, Geun Sang**
  **Seoul 07793 (KR)**

(74) Representative: **Ter Meer Steinmeister & Partner Patentanwälte mbB**
**Nymphenburger Straße 4**
**80335 München (DE)**

(54) **GOLF CLUB AND MANUFACTURING METHOD THEREOF**

(57)    Disclosed is a golf club and a method of manufacturing the same, whereby an Fe-based amorphous alloy layer is coated on a surface of a base part of a clubface provided on a side of a clubhead to maintain an amorphous structure after coating, thus ensuring that a repulsive force, durability, surface hardness, and the like of the clubface are improved. The golf club includes: a clubhead; and a shaft connected to the clubhead, wherein the clubhead includes a clubface provided on a side thereof, and the clubface includes: a base part; and a coating layer provided on a surface of the base part and including an Fe-based amorphous alloy.

Fig. 11

(a)

(b)

**Description**

BACKGROUND OF THE INVENTION

Field of the Invention

The present invention relates generally to a golf club and a method of manufacturing the same. More particularly, the present invention relates to a golf club and a method of manufacturing the same, whereby hardness of a surface of a clubhead is increased and repulsive and elastic forces are increased, thus increasing driving distance.

Description of the Related Art

In general, golf is an athletic sport in which players use golf clubs to hit a golf ball and hit the ball into a cup from a certain distance away, and unlike other sports, considerably high accuracy and mental power are required. In addition, unlike other sports, in golf, the direction and driving distance of the golf ball can be influenced by a golfer's posture during golf shots, a golf swing posture, and gripping of clubs. Golf clubs are largely classified into three types: drivers for increasing driving distance, irons for precise shots, and putters for hitting golf balls on the green. Most are made of high-strength metal such as titanium. In particular, in the case of drivers, for a long driving distance, human factors such as posture and speed, and repulsive force depending on the material and characteristics of the drivers (in particular, the face of a club) are important.

For this reason, attempts have been made to change composition of the face of a clubhead among components constituting a driver. For example, efforts have been made to improve an elastic force of golf clubs by researching and developing a technique of changing the surface material of the face of the clubhead, or a technique of changing the internal structure of the face of the clubhead, such as incorporating a separate member thereinside.

However, in the former case, the clubface may be damaged or there is a limit in improving the elastic force. In the latter case, it may be troublesome because this is a mechanism that requires the separate member to be incorporated inside the clubface. In addition, the incorporated member may be damaged after a long-term use, causing difficulty in using the driver and a reduction in the repulsive force. Therefore, there is a need to develop a new clubface that can improve performance of a golf club, such as repulsive force.

Documents of Related Art

(Patent document 1) U.S. Patent Application Publication No. 3,102,187

SUMMARY OF THE INVENTION

An objective of the present invention is to provide a golf club, whereby a clubface provided on a side of a clubhead includes a base part, and a coating layer provided on a surface of the base part and including an Fe-based amorphous alloy, thus ensuring that surface hardness, and repulsive and elastic forces of a surface of the clubhead are improved.

Another objective of the present invention is to provide a method of manufacturing a golf club, whereby a coating layer including an Fe-based alloy having a high proportion of amorphous phase is coated on a surface of a base part of a clubface provided on a side of a clubhead.

In order to achieve the above objective, according to one aspect of the present invention, there is provided a golf club, including: a clubhead; and a shaft connected to the clubhead, wherein the clubhead includes a clubface provided on a side thereof, and the clubface includes: a base part; and a coating layer provided on a surface of the base part and including an Fe-based amorphous alloy.

According to another aspect of the present invention, there is provided a method of manufacturing a golf club, the method including: forming a coating layer including an Fe-based amorphous alloy on a surface of a base part of a clubface provided on a side of a clubhead; and polishing the coating layer, wherein a proportion of an amorphous phase in the coating layer is 90 to 100%.

According to the golf club according to the embodiments of the present invention, the Fe-based amorphous alloy layer is coated on the surface of the base part of the clubface provided on a side of the clubhead, thus ensuring that the amorphous structure is maintained after coating. Therefore, the present invention has an advantage in that the surface hardness, elastic force, and the like of the surface of clubhead are improved, thus realizing significant improvement in the driving distance of a golf ball. The coating layer of the Fe-based amorphous alloy formed herein can maintain a high amorphous phase proportion.

Furthermore, according to the method of manufacturing the golf club according to the embodiments of the present invention, the shape and thickness of the base part of the clubface provided on a side of the clubhead are controlled to be reduced to a limit level, while reducing the thickness of the Fe-based amorphous alloy layer. Therefore, the present invention has an advantage in maximizing a repulsive force.

## BRIEF DESCRIPTION OF THE DRAWINGS

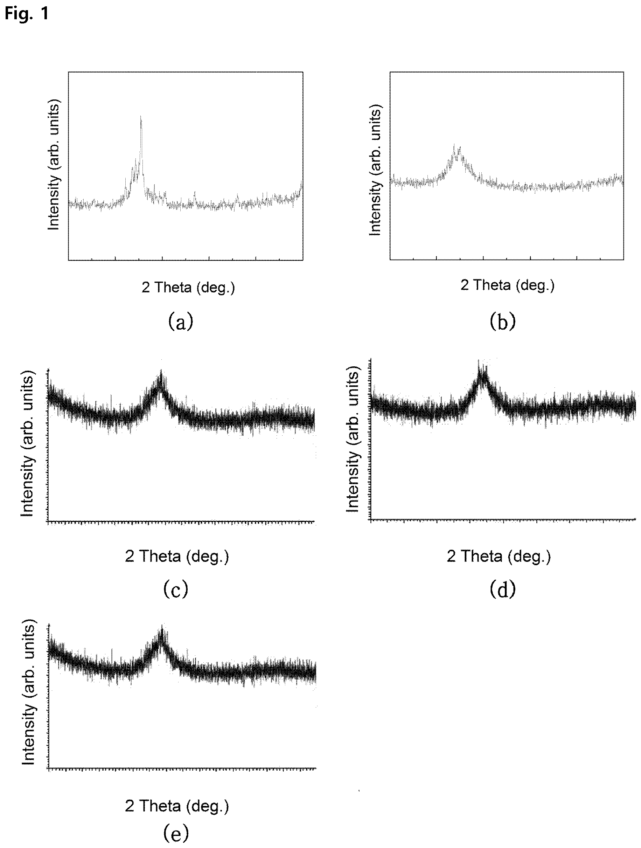

FIG. 1 shows XRD graphs of Fe-based amorphous alloy powders according to the present invention used as a coating material on a clubface, in which FIGS. 1A to 1E are XRD graphs of Fe-based amorphous alloy powders of Examples 1, 3, 6, 7, and 8, respectively.

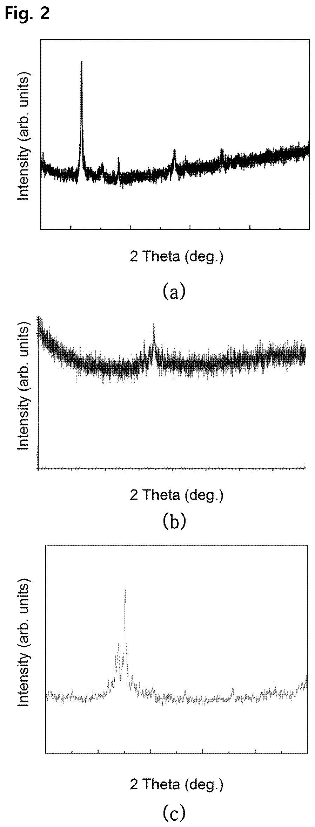

FIG. 2 shows XRD graphs of Fe-based alloy powders according to Comparative Examples used as the coating material on the clubface, in which FIGS. 2a to 2c are XRD graphs of Fe-based alloy powders of Comparative Examples 1, 5, and 7, respectively.

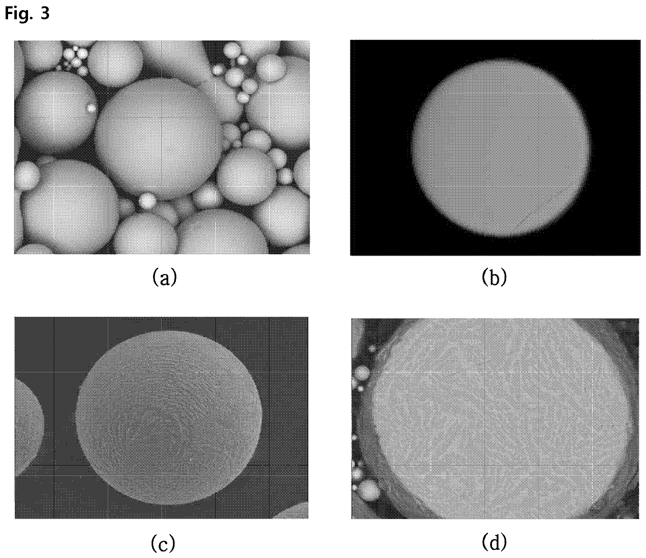

FIG. 3 shows SEM images, in which FIGS. 3A and 3B are SEM images of an Fe-based amorphous alloy powder of Example 7 used as the coating material on the clubface and a cross-section thereof, respectively, and FIGS. 3c and 3d are SEM images of an Fe-based alloy powder of Comparative Example 7 used as the coating material on the clubface and a cross-section thereof, respectively.

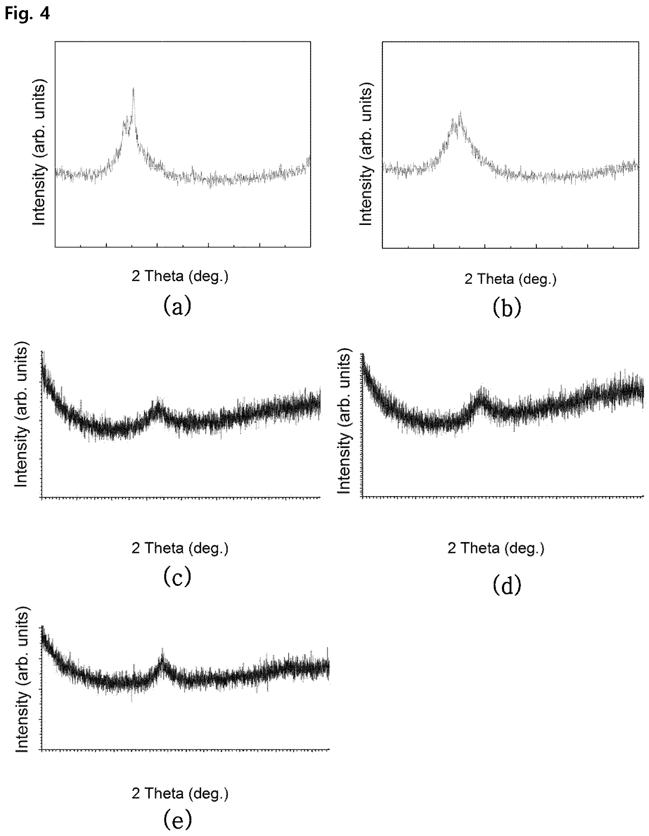

FIG. 4 shows XRD graphs of coating samples according to the present invention applied to the clubface, in which FIGS. 4a to 4e are XRD graphs of coating samples of Examples 9, 11, 14, 15, and 16 to which Fe-based amorphous alloy powders of Examples 1, 3, 6, 7, and 8 are applied, respectively.

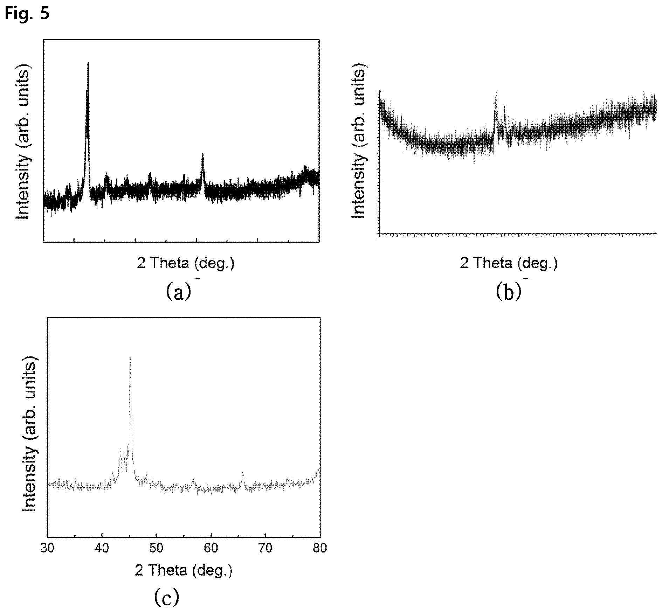

FIG. 5 shows XRD graphs of coating samples of Comparative Examples applied to the clubface, in which FIGS. 5a to 5c are XRD graphs of coating samples of Comparative Examples 8, 12, and 14 to which Fe-based alloy powders of Comparative Examples 1, 5, and 7 are applied, respectively.

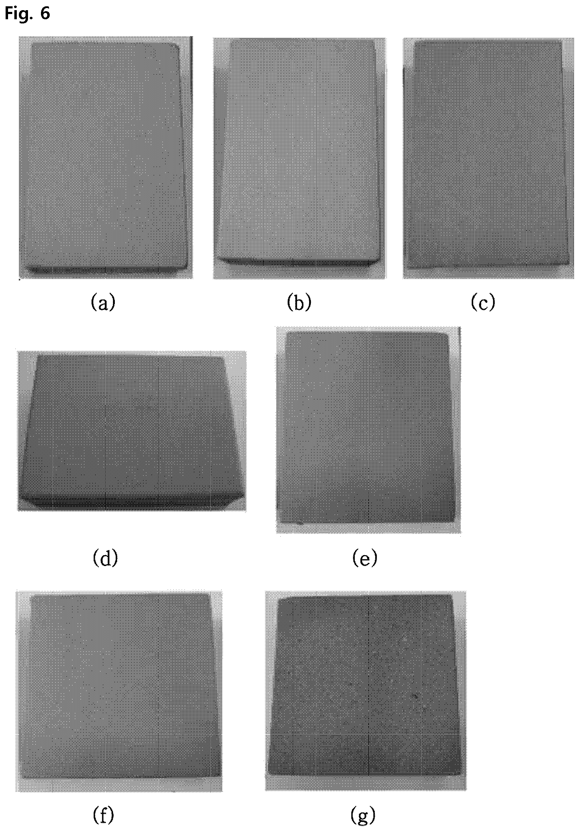

FIG. 6 shows surface images of thermal sprayed coatings using Fe-based amorphous alloy powders according to the present invention coated on the clubface and thermal sprayed coatings using alloy powders of Comparative Examples coated on the clubface, in which FIGS. 6a to 6c are surface images of thermal sprayed coatings using Fe-based amorphous alloy powders of Examples 1, 7, and 8, respectively, and FIGS. 6d to 6g are surface images of thermal sprayed coatings using alloy powders of Comparative Examples 1, 3, 5, and 7, respectively.

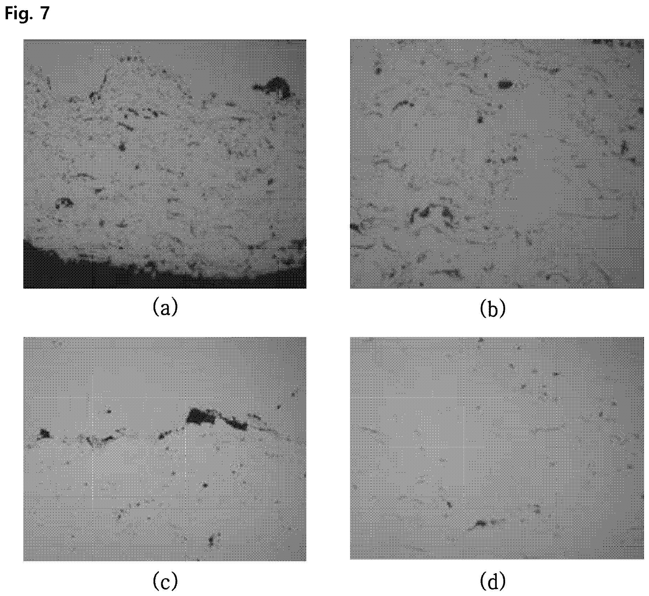

FIG. 7 shows images (200x magnification) of cross-sections of thermal sprayed coating samples using Fe-based amorphous alloy powders of Examples 1, 3, 6, and 8 according to the present invention as the coating material on the clubface, which are observed with an optical microscope, in which FIGS. 7a to 7d are images of cross-sections of samples of Examples 9, 11, 14, and 16, respectively.

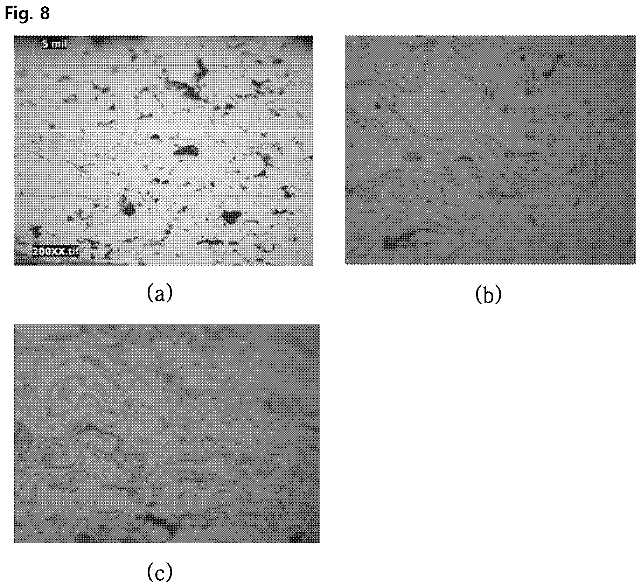

FIG. 8 shows images (200x magnification) of cross-sections of thermal sprayed coating samples using alloy powders of Comparative Examples 1, 4, and 7 as the coating material on the clubface, which are observed with the optical microscope, in which FIGS. 8a to 8c are images of cross-sections of samples of Comparative Examples 8, 11, and 14, respectively.

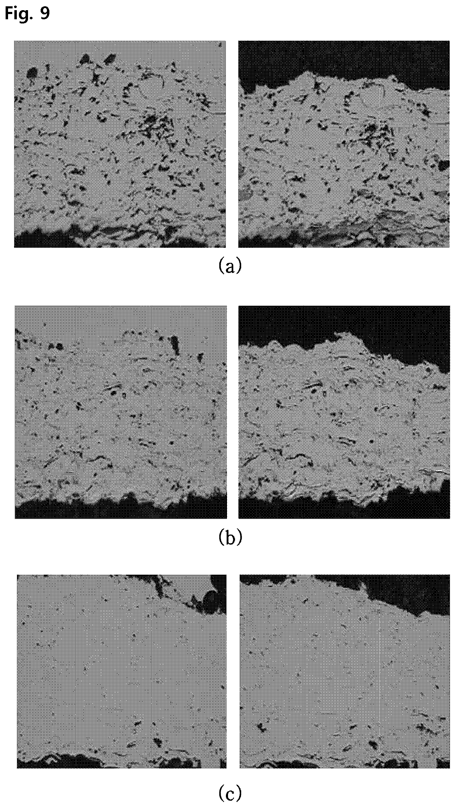

FIG. 9 shows images (200x magnification) of uncorroded/corroded cross-sections of thermal sprayed coating samples using Fe-based amorphous alloy powders of Examples 2, 4, and 7 according to the present invention as the coating material on the clubface, which are observed with the optical microscope, in which FIGS. 9a to 9c are images of samples of Examples 10, 12, and 15, respectively.

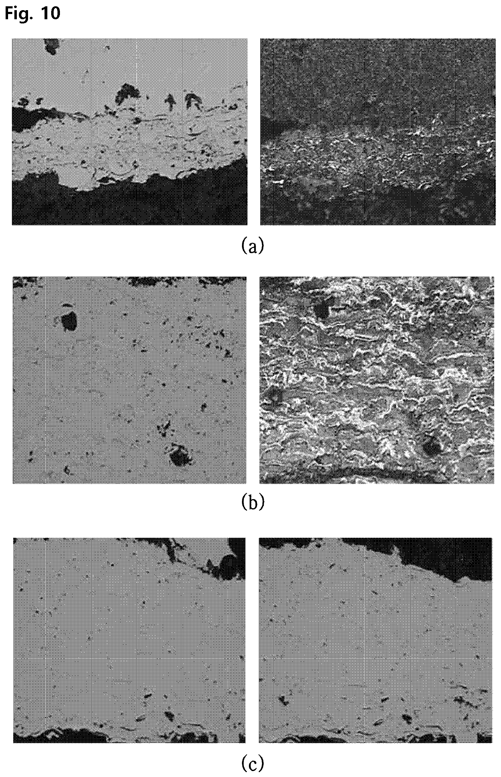

FIG. 10 shows images (200x magnification) of uncorroded/corroded cross-sections of thermal sprayed coating samples using alloy powders of Comparative Examples 2, 4, and 6 as the coating material on the clubface, which are observed with the optical microscope, in which FIGS. 10a to 10c are images of samples of Comparative Examples 8, 11, and 13, respectively.

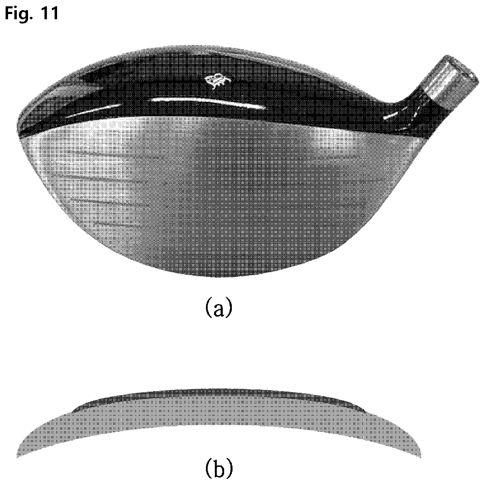

FIG. 11 shows embodiments of the present invention, in which FIG. 11a is a photogragh of a clubhead of a golf club produced according to the embodiments of the present invention, and FIG. 11b is a view schematically showing a form in which an Fe-based amorphous alloy layer is coated on a base part of a clubface.

## DETAILED DESCRIPTION OF THE INVENTION

Hereinafter, the present invention will be described in detail.
In the present specification, "amorphous" refers to a phase (also used as a non-crystalline or amorphous phase) which lacks the long range order of a crystal, e.g., which does not have a crystalline structure.
Furthermore, in the present specification, "coating layer" includes a coating film and the like made using an Fe-based amorphous alloy powder, and which are mainly made by thermal spraying.
Furthermore, in the present specification, "Fe-based amorphous alloy powder" refers an alloy powder in which iron is contained at the highest weight ratio, and an amorphous phase is not simply contained in the powder, but substantially occupies most of the powder, for example, the amorphous phase is contained in a proportion of equal to or greater than 90%.

As described above, in golf where very high accuracy is required unlike other sports, the material of a golf club for improving driving distance is particularly important. For this reason, attempts have been made to improve an elastic force of the golf club by changing the surface material of a clubface provided on a side of a clubhead. However, the surface of the clubface may be damaged, or, even if not damaged, there is a limit in improving the elastic force. This causes difficulty in development of a golf club having a further improved performance. Accordingly, the present applicant has developed a new golf club that can improve performance such as repulsive force compared with the related art.

A clubface having an amorphous surface according to the present invention may be obtained by coating an Fe-based amorphous alloy according to the present invention on the surface of a base part of a pre-made (ready-made) clubface (even when the Fe-based amorphous alloy according to the present invention is coated, it is limited to a thickness level that is not unreasonable for achieving the objective of the present invention). Alternatively, the clubface having the amorphous surface according to the present invention may be obtained by reducing the thickness of the base part of the pre-made clubface to a limit level (i.e., thinning of a conventional material for coating), and then coating the surface of the base part with the Fe-based amorphous alloy.

That is, a golf club according to the present invention is a golf club including a clubhead and a shaft connected to the clubhead. The clubhead includes a clubface provided on a side thereof, and the clubface includes: a base; and a coating layer provided on the surface of the base part and including an Fe-based amorphous alloy.

**<Golf club>**

A golf club according to an aspect of the present invention includes a base part of a clubhead, and a coating layer formed on the base.

The base part of the clubhead refers to a term referring to a typical face (hitting part) located on a side of the clubhead.

When an Fe-based amorphous alloy powder is coated on the base part of the clubface, there is a fear that the repulsive force at the time of hitting may not reach a desired level. Therefore, it is preferable that the shape and thickness of the base part of the clubface is controlled.

The thickness of the base part of the clubface may be 1.4 to 2.6 mm, preferably 1.6 to 2.4 mm, in consideration of the coating thickness of the Fe-based amorphous alloy. When the thickness of the base part is less than 1.4 mm, the thickness of a base material constituting the clubface is excessively reduced beyond the limit value, and thus a basic performance of the clubface may be degraded. On the other hand, when the thickness of the base part is greater than 2.6 mm, a total thickness of the base material and the Fe-based amorphous alloy is excessively increased, and thus the repulsive force at the time of hitting may not reach the desired level.

The shape of the base part of the clubface is planar in the case of irons, and in the case of drivers and woods, it is preferable that at least a part of a central portion of the base part has a convex shape as compared with remaining parts. When the thickness of the central portion is 1.8 mm, the thickness of a peripheral portion may be about 1.6 mm, when the thickness of the central portion is 2.2 mm, the thickness of the peripheral portion may be about 2.0 mm, and when the thickness of the central portion is 2.6 mm, the thickness of the peripheral portion may be about 2.4 mm.

In order to control the thickness and shape of the base part, for example, a method or equipment such as mold thickness control or CNC milling may be used. Herein, it may be more preferable that the thickness of the base part is controlled by controlling the mold thickness.

In order to prevent durability degradation that may occur due to the base part having a reduced thickness, a surface treatment process including forging that can densify the surface structure of the base part may be performed to improve mechanical properties such as strength, toughness, and durability.

Meanwhile, a material of the base part may be selected from the group consisting of Ti, Al, V, Mo, Fe, Cr, Sn, and Zr, and an alloy containing at least two thereof, and also face materials of all the golf clubs currently manufactured in the related art may be used.

The hardness of the base part may be HV 300 to HV 400, preferably HV 340 to HV 360.

Hereinafter, the coating layer, which is provided on the surface of the base part of the clubface and made of the Fe-based amorphous alloy, will be described.

The coating layer is a layer provided on the clubface to provide high repulsion, elasticity, and hardness. The coating layer is formed on the base part to occupy equal to greater than 60% of the area of the surface of the base part.

The Fe-based amorphous alloy used to form the coating layer refers an alloy in which iron, chromium, and molybdenum are contained as a main component, and an amorphous phase is not simply contained in powder, but substantially occupies most of the powder, for example, the amorphous phase is contained in a proportion of equal to or greater than 90%, or 90 to 100%.

The coating layer may be formed by spraying a molten Fe-based amorphous alloy powder on the surface of the base part.

The coating layer may be formed by cooling the molten Fe-based amorphous alloy powder from a melting point to a glass transition temperature at a cooling rate of $10^1$ to $10^4$ (degree/sec) after spraying.

It is preferable that the Fe-based amorphous alloy is provided from an Fe-based amorphous alloy powder containing iron, chromium, and molybdenum and further at least one selected from carbon and boron.

Herein, the Fe-based amorphous alloy powder is, for example, a powder having a high amorphous phase proportion, such as when an amorphous phase is contained in a proportion of equal to or greater than 90%, equal to or greater than 95%, equal to or greater than 99%, equal to or greater than 99.9%, or substantially 100% when prepared by atomizing.

The Fe-based amorphous alloy powder may be prepared in a variety of shapes and diameters without being limited thereto. The Fe-based amorphous alloy powder includes a first component, a second component, a third component, and a fourth component that are used for making the Fe-based amorphous alloy described above.

The first component is iron (Fe). Iron (Fe) is a component used to improve the rigidity of an alloy powder coating. The second component is chromium (Cr) used to improve the physical properties of the alloy powder coating, such as wear resistance, corrosion resistance, and the like. The second component may be contained in an amount of equal to or less than 55.3 parts by weight per 100 parts by weight of the first component, preferably 25.4 to 55.3 parts by weight.

The third component is molybdenum (Mo) used to impart the wear resistance, corrosion resistance, and friction resistance. The third component may be contained in an amount of equal to or less than 84.2 parts by weight per 100 parts by weight of the first component, preferably 35.6 to 84.2 parts by weight.

The fourth component uses at least one or two of carbon (C) and boron (B). The fourth component is used to improve the amorphous forming ability by atomic size mismatch with the other components, packing ratio efficiency, or the like. It is preferable that the fourth component is contained in an amount of equal to or less than 23.7 parts by weight, 1.7 to 23.7 parts by weight, 3.4 to 23.7 parts by weight, or 3.4 to 15 parts by weight, per 100 parts by weight of the first component.

In addition to the above-described components, the Fe-based amorphous alloy powder may intentionally or unintentionally include additional components selected from the group consisting of tungsten, cobalt, yttrium, manganese, silicon, aluminum, niobium, zirconium, phosphorus, nickel, scandium, and a mixture thereof. In terms of amount of the additional components, the additional components are contained in a total amount of less than 1.125 parts by weight, equal to or less than 1.000 parts by weight, or equal to or less than 0.083 parts by weight, per 100 parts by weight of iron. That is, when the amounts of the first component, the second component, the third component, the fourth component, and the additional components fulfill the above-described weight proportions, this case is regarded as an Fe-based alloy powder according to the present invention.

Furthermore, each of the additional components is contained in an amount of equal to or less than 0.9 parts by weight, preferably equal to or less than 0.05 parts by weight. This is because when the amount of the additional component is outside such a range, the amorphous forming ability is significantly reduced. The Fe-based amorphous alloy powder has excellent properties such as density, strength, wear resistance, friction resistance, and corrosion resistance due to the high amorphous phase proportion.

The Fe-based amorphous alloy powder prepared according to embodiments of the present invention may have an average particle size in a range of 1 to 150 $\mu$m, but is not limited thereto. The powder size thereof may be controlled by sieving depending on uses.

For example, when thermal spraying is to be performed as will be described later, a target Fe-based amorphous alloy powder may be used after controlling the powder size in a range of 16 to 54 $\mu$m by sieving. When metal powder injection molding (MIM) is to be performed, the target Fe-based amorphous alloy powder may be used after controlling the powder size to be equal to or less than 20 $\mu$m by sieving.

Furthermore, when three-dimensional (3D) printing is to be performed, the powder size of the target Fe-based amorphous alloy powder may be controlled depending on 3D printing methods. For example, when 3D printing is to be performed by a powder bed fusion method, the powder size may be controlled to be equal to or less than 20 $\mu$m, and when 3D printing is to be performed by a direct energy deposit method, the powder size may be controlled to be in a range of 54 to 150 $\mu$m.

The Fe-based amorphous alloy powder may have a density, for example, in a range of about $7 \pm 0.5$ g/cc, but is not limited thereto.

The Fe-based amorphous alloy powder may have a hardness in a range of about 800 to 1500 Hv, but is not limited thereto.

The Fe-based amorphous alloy powder is characterized by maintaining the above-described proportion of the amorphous phase even when re-melted or when exposed to high temperature and recooled for solidification. Herein, proportion a of the amorphous phase in the Fe-based amorphous alloy powder prepared by atomizing and proportion b of an alloy made by melting the Fe-based amorphous alloy powder above the melting point of the alloy and then re-cooling the same fulfill the following equation.

[Equation 1]

$$0.9 \leq b/a \leq 1$$

Here, examples of a method of making an alloy by melting the Fe-based amorphous alloy powder above the melting point of the alloy and then re-cooling the same in order to derive the b may include thermal spraying, 3D printing, and a known casting method such as metallurgy.

In addition, the ratio of b/a of the Equation 1 may be preferably 0.95 to 1, more preferably 0.98 to 1, and more preferably 0.99 to 1.

As described above, the coating layer may be formed by thermal spraying. Thermal spraying is a technique whereby a metal or metal compound is melted into fine droplets and sprayed onto a surface of an object to come into close contact with the surface, but the formation of the coating layer is not limited to a specific method of thermal spraying. Examples of thermal spraying used to form the coating layer may include high velocity oxygen fuel (HVOF) spraying, plasma spraying, laser cladding, general flame spraying, diffusion, cold spraying, vacuum plasma spraying (VPS), low-pressure plasma spraying (LPPS), and the like.

In the present specification, when the Fe-based amorphous alloy powder, which has a high amorphous phase proportion, such as when an amorphous phase is contained in a proportion of equal to or greater than 90%, equal to or greater than 95%, equal to or greater than 99%, equal to or greater than 99.9%, or substantially 100%, is used as a thermal spraying material, the coating layer contains an amorphous phase in a proportion of equal to or greater than 90%, equal to or greater than 95%, equal to or greater than 99%, equal to or greater than 99.9%, or substantially 100% by volume of the total structure, thus having very excellent physical properties. Particularly, when HVOF spraying is performed using the alloy powder according to the present invention, the degree of improvement of physical properties is maximized because the proportion of the amorphous phase is substantially maintained.

Furthermore, the Fe-based amorphous alloy powder exhibits a very high coating density of 98 to 99.9% upon measurement, which has an advantage in suppressing penetration of corrosives through pores.

The Fe-based amorphous alloy powder used in thermal spraying has a particle size of 10 to 100 $\mu$m, preferably 15 to 55 $\mu$m. This is because when the alloy powder has a particle size of less than 10 $\mu$m, small particles may adhere to a spraying gun during a spray coating process, which may contribute to a reduction in operating efficiency. Further, this is also because when the alloy powder has a particle size of greater than 100 $\mu$m, the alloy powder may collide with a base metal without being completely dissolved (i.e., may fall to the bottom without forming a coating), resulting in a reduction in coating productivity and efficiency.

Meanwhile, the Vickers hardness of the Fe-based amorphous alloy is 700 to 1,200 Hv (0.2), preferably 800 to 1,000 Hv (0.2), and the friction coefficient (friction resistance) is 0.001 to 0.08 $\mu$, preferably equal to or less than 0.05 $\mu$ at a load of 100 N, and is 0.06 to 0.12 $\mu$, preferably equal to or less than 0.10 $\mu$ at a load of 1,000 N.

Particularly, in the case of a coating made by HVOF spraying, unlike the related art, there are almost no pores present in the cross-section, and thus the coating exhibits a full density. On the contrary, even when the pores are present, a porosity of only about 0.1 to 1.0% is exhibited.

That is, when HVOF spraying is performed, a structure in which multiple paths are stacked is formed. In detail, oxides (black color) are accumulated on each layer, and multiple layers are stacked in a wave-like shape. While this usually causes the properties of a coating to be degraded and weakened, in the present invention, the coating has no pore/oxidation film, thus ensuring that the coating exhibits ultra-high density, and the performance thereof is improved. Moreover, it is possible that the coating layer including the Fe-based amorphous alloy powder exhibits improved wear resistance, corrosion resistance, and elasticity, which are advantageous over a case using an alloy powder in the related art.

Furthermore, the thickness of the coating layer of the Fe-based amorphous alloy coated on the base part is 0.01 to 0.3 mm, preferably 0.1 to 0.2 mm, and more preferably 0.075 to 0.125 mm. This is because when the thickness of the coating layer of the Fe-based amorphous alloy is outside such a range, a desired repulsive force of the clubface of the present invention may not be achieved.

Meanwhile, the Fe-based amorphous alloy may be coated on the entire surface of the base part, or may be coated only on a portion of the surface in a hitting direction. However, the Fe-based amorphous alloy may occupy equal to or greater than 60% of the total area of the surface of the base part of the clubface, preferably 70 to 95%, and more preferably 75 to 90%. In this case, it is possible that the driving distance of a golf ball hit in a corresponding area when the golf ball is hit on the clubface.

In addition, the Fe-based amorphous alloy may be formed in various patterns such as a lattice pattern as necessary.

Meanwhile, the Fe-based amorphous alloy powder as a raw material of the Fe-based amorphous alloy is prepared using a gas atomizer. In detail, the Fe-based amorphous alloy powder is prepared by spray cooling in a molten state in the atomizer under the atmosphere of inert gas such as helium, nitrogen, neon, argon or the like. When prepared in this way, it is possible that a powder having a high purity amorphous phase is prepared.

Next, the physical properties of the coating layer of the Fe-based amorphous alloy formed on the surface of the base part will be described. The Vickers hardness of the coating layer of the Fe-based amorphous alloy is 700 to 1,200 Hv (0.2), preferably 800 to 1,000 Hv (0.2), and the friction coefficient (friction resistance) is 0.0005 to 0.08 $\mu$, preferably 0.001 to 0.05 $\mu$ at a load of 100 N, and is 0.01 to 0.12 $\mu$, preferably 0.03 to 0.10 $\mu$ at a load of 1,000 N. The coefficient of restitution (COR) of the golf club to which the coating layer of the Fe-based amorphous alloy is applied indicates a high repulsion of equal to or greater than 0.83.

Furthermore, in the case of a coating layer made by HVOF spraying, unlike the related art, there are almost no pores present in the cross-section, and thus the alloy exhibits a full density of 99 to 100%, preferably 99.5 to 100%, and more preferably 99.8 to 100%. On the contrary, even when the pores are present, a porosity of only about 0.2 to 1.0% is exhibited.

That is, when HVOF spraying is performed, a structure in which multiple paths are stacked is formed. In detail, oxides (black color) are accumulated on each layer, and multiple layers are stacked in a wave-like shape. While this usually causes the properties of a coating layer to be degraded and weakened, in the present invention, an alloy layer (coating) has no pore/oxidation film, thus exhibiting ultra-high density, and also improving physical properties such as hardness, corrosion resistance, and wear resistance. Meanwhile, the clubface according to the present invention has a shape of a typical clubface, and there is no particular limitation on the size or shape thereof.

## <Method of manufacturing golf club>

Hereinafter, a method of manufacturing a golf club according to the present invention will be described.

The method of manufacturing the golf club according to the present invention includes: forming a coating layer including an Fe-based amorphous alloy powder on the surface of a base part of a clubface provided on a side of a clubhead; and polishing the coating layer.

In forming the coating layer, the coating layer may be formed by thermal spraying. The formation of the coating layer may be performed by any method known in the art, and the conditions and the environment thereof may also be similar to those in the art. For example, a method whereby a Sulzer Metco Diamond Jet or similar equipment is used, and oxygen flow, propane flow, air flow, feeder rate, nitrogen flow, and the like are appropriately controlled may be adopted.

In detail, the thermal spraying is performed in such a manner that the Fe-based amorphous alloy powder is melted and then sprayed onto the surface of the base part. The thermal spraying may be performed by a method selected from the group consisting of HVOF spraying, plasma spraying, vacuum plasma spraying, and wire arc spraying.

In forming the coating layer, the Fe-based amorphous alloy is configured such that proportion a of an amorphous phase in an alloy powder and proportion (b) of the amorphous phase in a coating layer fulfills an equation of $0.9 \leq b/a \leq 1$, the alloy powder being prepared by melting an Fe-based amorphous alloy powder containing iron, chromium, and molybdenum and further containing at least one of carbon and boron and then cooling the melted Fe-based amorphous alloy powder from a melting point to a glass transition temperature at a cooling rate of $10^1$ to $10^4$ (degree/sec), and the coating layer being prepared by re-melting the alloy powder and cooling the re-melted alloy powder from a melting point to a glass transition temperature at the cooling rate of $10^1$ to $10^4$ (degree/sec). In addition, the ratio of b/a may be preferably 0.95 to 1, more preferably 0.98 to 1, and more preferably 0.99 to 1.

The melted alloy powder is characterized in that even when the melted alloy powder is sprayed and cooled from a melting point to a glass transition temperature at a cooling rate of $10^2$ to $10^3$ or $10^1$ to $10^4$ (degree/sec), the amorphous phase is contained in the coating layer in a high proportion of equal to or greater than 90%, equal to or greater than 95%, equal to or greater than 99%, equal to or greater than 99.9%, or substantially 100% by volume.

When the thermal spraying is performed, a structure in which multiple paths are stacked is formed. In detail, oxides (black color) are accumulated on each layer, and multiple layers are stacked on the plate in a wave-like shape. While this usually causes the properties of the coating layer to be degraded and weakened, in the present invention, an alloy layer (coating layer) has no pore/oxidation film, thus exhibiting ultra-high density, and also improving physical properties such as hardness, corrosion resistance, and wear resistance.

In polishing the coating layer, the Fe-based amorphous alloy powder is subjected to thermal spraying to form the coating layer with a predetermined thickness, and then the surface of the coating layer is polished to reduce the thickness. That is, reducing the thickness of the surface of the coating layer formed by thermal spraying allows only a densely coated portion to remain on the clubface. For example, a 0.1 mm coating layer is formed by thermal spraying, polished to a thickness of about 0.025 mm, and finally a 0.075 mm coating layer is formed on the surface of the clubface.

Meanwhile, the method may further include before forming the coating layer, controlling the shape, strength, and thickness of the base part of the clubface. In order to control the thickness and shape of the base part, for example, a method or equipment such as mold thickness control or CNC milling may be used. Herein, it may be more preferable that the thickness of the base part is controlled by controlling the mold thickness.

In order to prevent durability degradation that may occur due to the base part having a reduced thickness, a surface treatment process including forging that can densify the surface structure of the base part may be performed to improve mechanical properties such as strength, toughness, and durability.

The present invention provides a golf club including a clubhead having the clubface provided on a side thereof, a shaft coupled to one end of the clubhead, and a grip part provided at an end of the shaft not connected to the clubhead. All the remaining parts except the clubface, such as the shaft, the clubhead, and the like, may use any known equipment in the art.

The present invention is to manufacture a new clubface by coating a high-repulsion, high-hardness, high-elasticity, low-friction amorphous alloy (having more than twice the hardness of a typical clubface material) to a clubface made of the typical material, whereby it is possible that the objective of the present invention to increase the driving distance by improving the ball speed, reducing the spin rate, and increasing the launch angle is achieved.

Hereinbelow, to aid to understanding the invention, exemplary embodiments of the present invention will be described. It should be understood that the embodiments of the present invention are only examples of the invention and those skilled in the art will appreciate that various modifications, additions and substitutions are possible, without departing from the scope and spirit of the invention as disclosed in the accompanying claims.

**<Examples>**

[Example 1 to Example 8: Preparation of Fe-based amorphous alloy powder]

Powders containing compositions having the components and weight ratio as shown in Table 1 below were fed into an atomizer under a nitrogen gas atmosphere, and then atomized in a molten state and cooled at a cooling rate shown in Table 1 below, whereby Fe-based amorphous alloy powders of Examples 1 to 8 were prepared.

Table

| Classification | Example 1 | Example 2 | Example 3 | Example 4 | Example 5 | Example 6 | Example 7 | Example 8 |
|---|---|---|---|---|---|---|---|---|
| Fe | 1 | 1 | 1 | 1 | 1 | 1 | 1 | 1 |
| Cr | 0.55 | 0.26 | 0.355 | 0.292 | 0.374 | 0.355 | 0.292 | 0.374 |
| Mo | 0.84 | 0.36 | 0.645 | 0.502 | 0.411 | 0.645 | 0.502 | 0.411 |
| C | 0.06 | - | 0.092 | - | .056 | 0.092 | 0.080 | 0.056 |
| B | - | 0.04 | - | 0.04 | - | 0.1 | 0.092 | 0.04 |
| Cooling rate (degree/sec) | $10^4$ | $10^4$ | $10^4$ | $10^3$ | $10^3$ | $10^2$ | $10^2$ | $10^2$ |
| * Powder average diameter | 5 | 5 | 10 | 20 | 20 | 50 | 50 | 50 |
| * D50 (unit: $\mu$m) | | | | | | | | |

As can be seen from Table 1, the Examples according to the present invention contained the first to fourth components in a specific amount range and were cooled at a cooling rate of $10^1$ to $10^4$ (degree/sec) to prepare alloy powders having a powder average diameter of 5 to 50 $\mu$m.

[Preparation Example 1: Preparation of clubface]

Clubfaces (base part, material: Ti) of typical (bare) clubheads were reduced in thickness by use of CNC milling to obtain a clubface with a thickness of 1.8 mm at a central portion and 1.6 mm at a peripheral portion, a clubface with a thickness of 2.2 mm at a central portion and 2.0 mm at a peripheral portion, and a clubface with a thickness of 2.6 mm at a central portion and 2.4 mm at a peripheral portion.

[Example 9 to Example 16: Formation of coating layer]

The Fe-based amorphous alloy powders of Examples 1 to 8 each of which was coated on the surface of a base part of each of the clubfaces obtained in Preparation Example 1 to a thickness of 0.1 mm by thermal spraying to manufacture clubfaces each having an Fe-based amorphous alloy layer.

In detail, coatings having a thickness of 0.3 mm were formed. Oerlikon Metco Diamond Jet series HVOF gas fuel spray system was used, fuel was oxygen and propane gas, and high velocity oxygen fuel (HVOF) was used, with a spray distance of 30 cm. The device and specific conditions used herein are as follows.

DJ Gun HVOF

[Condition] Gun type: Hybrid, Air cap: 2701, LPG flow: 160 SCFH, LPG pressure: 90 PSI, Oxygen flow: 550 SCFH, Oxygen pressure: 150 PSI, Air flow: 900 SCFH, Air pressure: 100 PSI, Nitrogen flow: 28 SCFH, Nitrogen pressure: 150 PSI, Gun speed: 100 m/min, Gun pitch: 3.0mm, Feeder rate 45 g/min, Stand-off distance: 250 mm

[Preparation Example 2: Manufacturing of golf club]

The Fe-based amorphous alloy layer on the surface of a base part formed on a side of each of the clubfaces obtained from Examples 9 to 16 was polished by 0.025 mm. Then, each of the clubfaces was attached to a clubhead to manufacture typical golf clubs each having a shaft and a grip part connected to each other.

A photograph of the clubface manufactured from Example 9 is shown in FIG. 11a. Herein, a form in which the Fe-based amorphous alloy layer is coated on the surface of the base part of the clubface is schematically shown in FIG. 11b. Referring to FIG. 11b, the Fe-based amorphous alloy layer is formed to occupy about 80% of the total area of the surface the base part, based on the central portion. This case is advantageous in increasing the driving distance, which was found from Test Example 8 below.

[Comparative Example 1 to Comparative Example 7: Preparation of Fe-based alloy powder]

Powders containing compositions having the components and weight ratio as shown in Table 2 below were fed into an atomizer under a nitrogen gas atmosphere, and then atomized in a molten state and cooled at a cooling rate shown in Table 2 below, whereby Fe-based alloy powders of Comparative Examples 1 to 7 were prepared.

Table 2

| Classification | Comparative example 1 | Comparative example 2 | Comparative example 3 | Comparative example 4 | Comparative example 5 | Comparative example 6 | Comparative example 7 |
|---|---|---|---|---|---|---|---|
| Fe | 1 | 1 | 1 | 1 | 1 | 1 | 1 |
| Cr | 0.56 | 0.20 | 0.714 | 0.714 | 0.550 | 0.411 | 0.196 |
| Mo | 0.30 | 0.85 | 0.345 | 0.245 | 0.183 | 0.374 | 0.686 |
| C | - | - | 0.020 | 0.060 | 0.028 | 0.028 | 0.020 |
| B | - | 0.04 | - | - | 0.073 | 0.056 | 0.059 |
| Cooling rate (degree/sec) | $10^4$ | $10^4$ | $10^4$ | $10^3$ | $10^2$ | $10^2$ | $10^2$ |
| * Powder average diameter | 5 | 5 | 10 | 20 | 50 | 50 | 50 |

* D50 (unit: $\mu$m)

As can be seen from Table 2, the Comparative Examples according to the present invention contained the first to fourth components in a specific amount range and were cooled at a cooling rate of $10^1$ to $10^4$ (degree/sec) to prepare alloy powders having a powder average diameter of 5 to 50 $\mu$m.

[Preparation Example 3: Preparation of Clubface]

A clubface, which is typically used and is made of a material the same as that of the bare clubface of Preparation Example 1, with a thickness of 3.0 mm, was obtained (i.e., not coated with an Fe-based amorphous alloy powder).

[Comparative Example 8 to Comparative Example 14: Formation of coating layer using Fe-based alloy powder]

The alloy powder of Comparative Examples 1 to 7 each of which was coated on the surface of a base part of the clubface obtained in Preparation Example 3 by thermal spraying to a thickness of 0.1 mm in the same manner as in Examples to manufacture a clubface having a coating layer.

[Preparation Example 4: Manufacturing of golf club]

The clubface of Preparation Example 3 was attached to a clubhead to manufacture a typical golf club having a shaft and a grip part connected to each other. Hereinafter, the case of using the golf club of Preparation Example 3 is referred to as Comparative Example 15 for convenience.

Furthermore, the Fe-based amorphous alloy layer on the surface of a base part formed on a side of the clubface manufactured from Comparative Examples 8 to 14 was polished by 0.025 mm. Then, the clubface was attached to a clubhead to manufacture a typical golf club having a shaft and a grip part connected to each other.

[Test Example 1: Evaluation of amorphousness of alloy powder]

XRD measurement results for Fe-based amorphous alloy powders of Examples were shown in FIG. 1. FIG. 1 shows XRD graphs of Fe-based amorphous alloy powders according to the present invention, in which FIGS. 1a to 1e are XRD graphs of Fe-based amorphous alloy powders of Examples 1, 3, 6, 7, and 8, respectively. As shown in FIG. 1, it was found that each of Examples 1, 3, 6, 7, and 8 had a broad peak at a 2-Theta (2θ) value of 40 to 50 degree angles, and each of which formed an amorphous phase.

Furthermore, XRD measurement results for Fe-based amorphous alloy powders of Comparative Examples were shown in FIG. 2. FIG. 2 shows XRD graphs of Fe-based alloy powders according to Comparative Examples, in which FIGS. 2a to 2c are XRD graphs of Fe-based alloy powders of Comparative Examples 1, 5, and 7, respectively. As shown in FIG. 2, it was found that each of Comparative Examples 1, 5 and 7 had a first sharp peak at a 2-Theta (2θ) value of 40 to 50 degree angles and an additional second peak at 65 to 70 degree angles at a minimum, and each of which formed some crystalline phase together with an amorphous phase.

Particularly, considering the height of the second peak, it was found that the number of crystalline phases increased sequentially from Comparative Example 7, Comparative Example 5, to Comparative Example 1, i.e., from FIG. 2c to FIG. 2a.

[Test Example 2: Evaluation of amorphousness of coating]

In FIG. 3, SEM images of an Fe-based amorphous alloy powder (as atomized) according to Example 7 and the cross-section thereof, and an Fe-based alloy powder (as atomized) according to Comparative Example 7 and the cross-section thereof are shown. FIGS. 3a and 3b respectively show the Fe-based amorphous alloy powder (as atomized) of Example 7 and the cross-section thereof, and FIGS. 3c and 3d respectively show the Fe-based alloy powder (as atomized) of Comparative Example 7 and the cross-section thereof.

As shown in FIG. 3b, it was found that no structure was observed, thus showing a porosity of substantially 0%. On the other hand, as shown in FIG. 3d, it was found that a number of structures were observed.

Furthermore, in FIG, 4, amorphous XRD graphs of Fe-based amorphous alloy powder coating samples prepared in Examples 9 to 16 are shown. FIG. 4 shows XRD graphs of coating samples according to the present invention, in which FIGS. 4a to 4e are XRD graphs of coating samples of Examples 9, 11, 14, 15, and 16 to which Fe-based amorphous alloy powders of Examples 1, 3, 6, 7, and 8 are applied, respectively. Referring to FIG. 4, in each of the Examples, an additional peak is not present while a wide XRD first peak is present. Therefore, it was found that powders according to the present invention had an amorphous structure.

Furthermore, in FIG. 5, XRD graphs of Fe-based alloy powder coating samples prepared in Comparative Examples are shown. FIG. 5 shows XRD graphs of coating samples of Comparative Examples, in which FIGS. 5a to 5c are XRD graphs of coating samples of Comparative Examples 8, 12, and 14 to which Fe-based alloy powders of Comparative Examples 1, 5, and 7 are applied, respectively. Referring to FIG. 5, in each of the Comparative Examples, an additional peak is present together with a sharp first peak. Therefore, it was found that powders according to the Comparative Examples were crystalline powders having no amorphous phase.

That is, it was found from such results that the alloy powders according to the present invention had a much higher amorphous forming ability than the alloy powders according to the Comparative Examples.

As a result of comparison between the XRD graphs of FIG. 1 and the XRD graphs of FIG. 3, as shown in FIG. 3, it was found that in all of the Examples, the amorphous structure of the powder was maintained even in the coating.

Particularly, in the case of the present test example, it was found that that a coating is formed to entirely have a substantially amorphous phase (equal to or greater than 95% by volume) by HVOF spraying.

[Test Example 3: Macroscopic quality evaluation of thermal sprayed coating using alloy powder]

FIG. 6 shows surface images of thermal sprayed coatings using Fe-based amorphous alloy powders according to the present invention and thermal sprayed coatings using alloy powders of Comparative Examples, in which FIGS. 6a to 6c are surface images of thermal sprayed coatings of Examples 9, 15, and 16 using Fe-based amorphous alloy powders of Examples 1, 7, and 8, respectively, and FIGS. 6d to 6g are surface images of thermal sprayed coatings of Comparative Examples 8, 10, 12, and 14 using alloy powders of Comparative Examples 1, 3, 5, and 7, respectively.

As a result of evaluation, it was found that the coating of Comparative Example 14 had poor coating surface quality (see FIG. 6g), and the coatings of the remaining Examples and Comparative Examples all had excellent or good coating surface quality.

[Test Example 4: Microscopic quality evaluation of thermal sprayed coating using alloy powder]

FIG. 7 shows images of cross-sections of thermal sprayed coating samples using Fe-based amorphous alloy powders of Examples 1, 3, 6, and 8 according to the present invention, which are observed with an optical microscope (Leica DM4 M), in which FIGS. 7a to 7d are images of cross-sections of samples of Examples 9, 11, 14, and 16, respectively. FIG. 8 shows images of cross-sections of thermal sprayed coating samples using alloy powders of Comparative Examples 1, 4, and 7, which are observed with the optical microscope, in which FIGS. 8a to 8c are images of cross-sections of samples of Comparative Examples 8, 11, and 14, respectively. As shown in FIG. 7, it was found that the cross sections of the coating of Examples 9, 11, 14, and 16 all exhibited high density.

On the other hand, as shown in FIG. 8, it was found that the cross-sections of the coatings of Comparative Examples 8, 11, and 14 not only contained a number of unmelted particles but also contained a number of gray phases, and layer-layer characteristics were exhibited.

[Test Example 5: Evaluation of hardness of thermal sprayed coating using alloy powder]

A micro-hardness test for cross-sections of coating samples was performed on the thermal sprayed coatings of Examples 11, 14, and 16, and on the thermal sprayed coatings of Comparative Examples 8, 10, 12, and 14 using an HVS-10 Digital Low Load Vickers Hardness Tester, and the results are shown in Table 3 below.

Table 3

| Classification | area | Test value $HV_{0.2}$ | Average $HV_{0.2}$ |
| --- | --- | --- | --- |
| Example 11 | Cross-section | 802/754/828/765/710 | 771 |
| Example 14 | Cross-section | 898/834/944/848/789 | 862 |
| Example 16 | Cross-section | 1304/1139/1097/1194/1139 | 1174 |
| Comparative example 8 | Cross-section | 669/756/623/689/683 | 684 |
| Comparative example 10 | Cross-section | 928/862/876/921/802 | 877 |
| Comparative example 12 | Cross-section | 828/848/1012/944/771 | 880 |
| Comparative example 14 | Cross-section | 821/855/808/783/633 | 780 |

As shown in Table 3, in terms of the cross-section, a sample to which the alloy powder of Example 16 was applied was the most excellent in average hardness, and those of the remaining Examples had similar hardness values to the Comparative Examples.

[Test Example 6: Evaluation of corrosion resistance of thermal sprayed coating using alloy powder]

FIG. 9 shows images of uncorroded/corroded cross-sections of thermal sprayed coating samples using Fe-based amorphous alloy powders of Examples 2, 4, and 7 according to the present invention, which are observed with the optical microscope, in which FIGS. 9a to 9c are images of samples of Examples 10, 12, and 15, respectively. FIG. 10 shows images of uncorroded/corroded cross-sections of thermal sprayed coating samples using alloy powders of Comparative Examples 2, 4, and 6, which are observed with the optical microscope, in which FIGS. 10a to 10c are images of samples of Comparative Examples 8, 11, and 13, respectively.

In detail, each of the thermal sprayed coating samples was immersed in a solution of sulfuric acid ($H_2SO_4$) at a concentration of 95 to 98% for 5 minutes at room temperature. Then, the cross-sections of an uncorroded coating sample and a corroded coating sample, and the surfaces were observed with an optical microscope (Leica DM4 M). In FIGS. 9 and 10, an uncorroded coating is shown on the left side, and a corroded coating is shown on the right side.

As a result of observation, when the coating samples of Examples 10, 12, and 15 were used, as shown in FIG. 9, there was no difference in appearance before and after immersion in the solution of sulfuric acid, and it was found that the best corrosion resistance was exhibited.

On the other hand, when the coating samples of Comparative Examples 8, 11, and 13 are used, as shown in FIG. 10, the corrosion progressed significantly and very poor corrosion resistance was exhibited.

This is due to the absence or presence of the amorphous structure of a coating. While in the Examples, a coating did not react with strongly acidic corrosive, in the Comparative Examples containing the crystalline structure, a coating reacted with the corrosive to corrode and exhibited poor corrosion resistance.

[Test Example 7: Evaluation of friction of thermal sprayed coating using alloy powder]

In order to evaluate the friction (friction coefficient), the coating samples of alloy powder prepared in Examples 14 to 16 and Comparative Examples 11 to 14 were subjected to a metal ring-lump test under lubricant conditions to obtain wear width values. In detail, the ring-lump test was performed using MR-H3A high-speed ring-lump wear tester having L-MM 46 resistance friction hydromantic lubricant, under parameters of 50 N, 5 min → 100 N, 25 min → 1000 N, 55 min.

The friction coefficients of the samples under the parameters of 100 N, 25 min and 1000 N, 55 min are shown in Table 4 below, and wear width measurement results are shown in Table 5 below.

Table 4

| Classification | 100N, 25min | | 1000N, 55min | |
|---|---|---|---|---|
| | Friction coefficient($\mu$) | Average friction coefficient($\mu$) | Friction coefficient($\mu$) | Average friction coefficient($\mu$) |
| Example 9 | 0.001~0.007 | 0.0044 | 0.040~0.078 | 0.0692 |
| Example 14 | 0.005~0.024 | 0.0127 | 0.007~0.095 | 0.0860 |
| Example 15 | 0.006~0.028 | 0.0135 | 0.007~0.098 | 0.0882 |
| Comparative example 8 | 0.030~0.054 | 0.0419 | 0.101~0.119 | 0.1123 |
| Comparative example 10 | 0.008~0.047 | 0.0196 | 0.088~0.116 | 0.0913 |
| Comparative example 12 | 0.065~0.087 | 0.0820 | 0.098~0.111 | 0.1085 |

Table 5

| Classification | Width/mm |
|---|---|
| Example 9 | 0.79 |
| Example 14 | 0.75 |
| Example 15 | 0.71 |

(continued)

| Classification | Width/mm |
|---|---|
| Comparative example 8 | 0.98 |
| Comparative example 10 | 1.15 |
| Comparative example 12 | 0.82 |

From the results of Tables 4 and 5, it was found that Examples 9 and 14 had a high friction coefficient on average, and Comparative Examples 8 and 10 had a relatively low friction coefficient. Furthermore, from FIG. 11 and Table 5, it was found that the Examples had a relatively narrow width, and the remaining Comparative Examples had a relatively wide width.

[Test Example 8: Measurement of driving distance of golf ball]

Each of the golf clubs obtained in Preparation Example 2 and Preparation Example 4 was mounted on a ball trajectory analysis swing robot (Foresight GCQuad) with an ultra high-speed camera system, and a golf swing robot distance hitting test was performed under 90 mph & 95 mph conditions. Test items were ball speed, launch angle, backspin rate, side angle, carry, and total distance. The test was repeated five times, and the average values are shown in Tables 6 and 7 below.

Table 6

| | Face total thickness (mm) | Surface treatment | Ball speed (MPH) | Launch angle (Degrees) | Backspin (RPM) | Side angle (Degree) |
|---|---|---|---|---|---|---|
| Example 14 | 1.7 | ○ | 137.9 | 12.9 | 2279 | -0.6 |
| Example 15 | 2.1 | ○ | 139.1 | 12.5 | 1867 | -0.8 |
| Example 16 | 2.5 | ○ | 139.2 | 14.6 | 1762 | 0 |
| Comparative example 15 | 3.0 | × | 136.4 | 12.3 | 2648 | -0.9 |

Table 7

| | Face total thickness (mm) | Surface treatment | Carry (YDS) | Total (YDS) |
|---|---|---|---|---|
| Example 14 | 1.7 | ○ | 231 | 251 |
| Example 15 | 2.1 | ○ | 235 | 258 |
| Example 16 | 2.5 | ○ | 243 | 266 |
| Comparative example 15 | 3.0 | × | 223 | 243 |

As a result of hitting golf balls with the manufactured golf clubs using the swing robot as described above, the ball speed and the launch angle were increased, and the spin rate was decreased. Particularly, there was a significant improvement in the total distance, and in the case of the total distance of Example 16, the maximum 23 yards were increased as compared with Comparative Example 15.
From such results, it was found that when the thickness of the clubface was reduced to a limit level and coated with an amorphous alloy layer by surface treatment, the hardness of the clubface was increased, whereby the ball speed, the launch angle, and the spin rate were increased, resulting in the driving distance being dramatically increased.

[Test Example 9: Evaluation of coefficient of restitution of amorphous alloy coated on clubface]

In order to evaluate the coefficient of restitution (COR), samples of the clubfaces of Examples 16 to 18 and Comparative Example 15 were subjected to a COR test to obtain coefficient of restitution values.
As a result of evaluation, it was found that the COR of the samples of the clubfaces of Examples 16 to 18 were all equal to or greater than 0.83, and high-repulsion driver were provided.

On the other hand, it was found that the COR of the sample of the clubface of Comparative Example 15 was less than 0.83, and a high-repulsion driver was not provided.

**Claims**

1. A golf club, comprising:

   a clubhead; and
   a shaft connected to the clubhead,
   wherein the clubhead includes a clubface provided on a side thereof, and
   the clubface includes:

   a base part; and
   a coating layer provided on a surface of the base part and including an Fe-based amorphous alloy.

2. The golf club of claim 1, wherein the coating layer is formed by spraying a molten Fe-based amorphous alloy powder on the surface of the base part, and a proportion of an amorphous phase in the coating layer is 90 to 100%.

3. The golf club of claim 2, wherein the coating layer is formed by cooling the molten Fe-based amorphous alloy powder from a melting point to a glass transition temperature at a cooling rate of $10^1$ to $10^4$ (degree/sec) after spraying.

4. The golf club of claim 3, wherein the Fe-based amorphous alloy is an amorphous structure and contains iron, chromium, and molybdenum as a main component.

5. The golf club of claim 4, wherein the Fe-based amorphous alloy is provided from an Fe-based amorphous alloy powder containing 25.4 to 55.3 parts by weight of chromium and 35.6 to 84.2 parts by weight of molybdenum per 100 parts by weight of iron, and further containing at least one of carbon and boron.

6. The golf club of claim 5, wherein the coating layer has a thickness of 0.01 to 0.3 mm.

7. The golf club of claim 6, wherein the base part has a thickness of 1.4 to 2.6 mm, and the base part is configured such that at least a part of a central portion has a convex shape as compared with a remaining portion.

8. The golf club of claim 7, wherein the coating layer is formed to occupy at least 60% of a total area of the surface of the base part.

9. The golf club of claim 8, wherein the coating layer of the Fe-based amorphous alloy has a Vickers hardness of 700 to 1,200 Hv (0.2).

10. The golf club of claim 9, wherein the coating layer of the Fe-based amorphous alloy has a friction coefficient of 0.0005 to 0.08 $\mu$ at a load of 100 N, and 0.01 to 0.12 $\mu$ at a load of 1,000 N.

11. The golf club of claim 10, wherein the golf club to which the coating layer of the Fe-amorphous alloy is applied has a coefficient of restitution (COR) of equal to or greater than 0.83.

12. The golf club of claim 11, wherein the Fe-based amorphous alloy further contains one selected from the group consisting of tungsten, cobalt, yttrium, manganese, silicon, aluminum, niobium, zirconium, phosphorus, nickel, scandium, and a mixture thereof.

13. The golf club of claim 12, wherein the base part is selected from the group consisting of Ti, Al, V, Mo, Fe, Cr, Sn, and Zr, and an alloy containing at least two thereof.

14. A method of manufacturing a golf club, the method comprising:

   forming a coating layer including an Fe-based amorphous alloy on a surface of a base part of a clubface provided on a side of a clubhead; and
   polishing the coating layer,

wherein a proportion of an amorphous phase in the coating layer is 90 to 100%.

15. The method of claim 14, wherein in the forming the coating layer, the coating layer is formed by thermal spraying.

16. The method of claim 15, wherein the thermal spraying is performed in such a manner that an Fe-based amorphous alloy powder is melted and then sprayed onto the surface of the base part.

17. The method of claim 16, wherein the melted alloy powder is cooled after being sprayed at a cooling rate of $10^1$ to $10^4$ (degree/sec) from a melting point to a glass transition temperature.

18. The method of claim 17, wherein in the forming the coating layer, the base part of the clubface is controlled in shape and thickness such that at least a part of a central portion of the base part has a convex shape as compared with a remaining portion.

EP 3 815 755 A1

**Fig. 1**

(a)

(b)

(c)

(d)

(e)

17

## Fig. 2

(a)

(b)

(c)

Fig. 3

(a)

(b)

(c)

(d)

Fig. 4

2 Theta (deg.)

(a)

2 Theta (deg.)

(b)

2 Theta (deg.)

(c)

2 Theta (deg.)

(d)

2 Theta (deg.)

(e)

**Fig. 5**

(a)

(b)

(c)

**Fig. 6**

(a)          (b)          (c)

(d)          (e)

(f)          (g)

**Fig. 7**

(a)

(b)

(c)

(d)

**Fig. 8**

(a)

(b)

(c)

Fig. 9

(a)

(b)

(c)

**Fig. 10**

(a)

(b)

(c)

**Fig. 11**

(a)

(b)

## INTERNATIONAL SEARCH REPORT

| International application No. |
|---|
| PCT/KR2019/008573 |

| A. CLASSIFICATION OF SUBJECT MATTER |
|---|
| *A63B 53/04(2006.01)i, C22C 38/22(2006.01)i, C22C 38/32(2006.01)i* |
| According to International Patent Classification (IPC) or to both national classification and IPC |

**B. FIELDS SEARCHED**

Minimum documentation searched (classification system followed by classification symbols)
A63B 53/04; A63B 53/06; C22C 45/02; C23C 4/06; C22C 38/22; C22C 38/32

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: golf club head, amorphous alloy, coating layer, club face

**C. DOCUMENTS CONSIDERED TO BE RELEVANT**

| Category* | Citation of document, with indication, where appropriate, of the relevant passages | Relevant to claim No. |
|---|---|---|
| X | JP 2000-288130 A (DAIWA SEIKO INC.) 17 October 2000 | 1 |
| | See paragraphs [0009], [0012]-[0013], [0017], [0027]; claim 1; and figure 1(b). | |
| Y | | 2-18 |
| Y | KR 10-2012-0139821 A (CRUCIBLE INTELLECTUAL PROPERTY LLC.) 27 December 2012 | 2-18 |
| | See paragraphs [0052], [0095]-[0096], [0103]; and claims 1, 3-4, 13. | |
| Y | KR 10-2018-0051599 A (KARSTEN MANUFACTURING CORPORATION) 16 May 2018 | 10-13 |
| | See paragraph [0030]; and figures 3-4. | |
| A | JP 2001-170226 A (SUMITOMO RUBBER IND., LTD.) 26 June 2001 | 1-18 |
| | See paragraphs [0011]-[0020]; and figure 2. | |
| A | US 7438647 B1 (HOCKNELL, Alan) 21 October 2008 | 1-18 |
| | See column 11, lines 25-40; and figure 5. | |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 OCTOBER 2019 (30.10.2019) | 30 OCTOBER 2019 (30.10.2019) |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

| International application No. |
|---|
| **PCT/KR2019/008573** |

| Patent document cited in search report | Publication date | Patent family member | Publication date |
|---|---|---|---|
| JP 2000-288130 A | 17/10/2000 | None | |
| KR 10-2012-0139821 A | 27/12/2012 | CN 102859024 A | 02/01/2013 |
| | | CN 106995906 A | 01/08/2017 |
| | | EP 2558607 A1 | 20/02/2013 |
| | | EP 2558607 B1 | 09/08/2017 |
| | | KR 10-1450988 B1 | 15/10/2014 |
| | | US 10131978 B2 | 20/11/2018 |
| | | US 2013-0052361 A1 | 28/02/2013 |
| | | WO 2011-116350 A1 | 22/09/2011 |
| KR 10-2018-0051599 A | 16/05/2018 | GB 2556839 A | 06/06/2018 |
| | | JP 2018-526151 A | 13/09/2018 |
| | | US 10232231 B2 | 19/03/2019 |
| | | US 2017-0072274 A1 | 16/03/2017 |
| | | US 2019-0151720 A1 | 23/05/2019 |
| | | WO 2017-044944 A1 | 16/03/2017 |
| JP 2001-170226 A | 26/06/2001 | None | |
| US 7438647 B1 | 21/10/2008 | None | |

Form PCT/ISA/210 (patent family annex) (January 2015)

**EP 3 815 755 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3102187